# EUROPEAN PATENT APPLICATION

(11) **EP 4 637 242 A1**
(43) Date of publication of application: **22.10.2025**
(21) Application number: 22968098.8
(22) Date of filing: 12.12.2022
(51) Int. Cl.: H04W 72/115

(54) **METHOD FOR DETERMINING CONFIGURED GRANT (CG) RESOURCE, AND APPARATUS**

(71) Applicant: Beijing Xiaomi Mobile Software Co., Ltd., Beijing 100085 (CN)
(72) Inventor: GUO, Shengxiang, Beijing 100085 (CN)
(74) Representative: Stöckeler, Ferdinand
(86) International application number: PCT/CN2022/138501
(87) International publication number: WO 2024/124384

(57) **Abstract**

The present disclosure relates to a method for determining a configured grant (CG) resource, and an apparatus. The method comprises: a terminal device may send a first message to a network device, where the first message maybe used for indicating a resource use status of at least one configured grant (CG) resource, so as to facilitate the network device in using and scheduling the CG resource according to said resource use status. The flexibility of CG resource use is thus improved.

## Description

### FIELD

The present disclosure relates to the field of communications technology, and more particularly, to a method and an apparatus for determining a configured grant (CG) resource.

### BACKGROUND

In wireless communication systems, in order to reduce the uplink service delay, the 3rd generation partnership project (3GPP) introduced grant-free uplink scheduling, and a resource used for the grant-free uplink scheduling can be a configured grant (CG) resource. For example, the CG resource may include a physical uplink shared channel (PUSCH) transmission resource with a CG, or other transmission resources for the grant-free uplink scheduling. The network device may pre-configure the CG resource used for uplink transmission for the terminal device, and the terminal device may autonomously use the CG resource for the uplink transmission without the need for scheduling by the network device, saving the scheduling resource and reducing the uplink service delay.

### SUMMARY

In order to overcome the above problem existed in the related art, the present disclosure provides a method and an apparatus for determining a configured grant (CG) resource.

According to a first aspect of embodiments of the present disclosure, there is provided a method for determining a configured grant (CG) resource, which is performed by a terminal device and includes: sending a first message to a network device, in which the first message is used to indicate a resource use status of at least one configured grant (CG) resource.

In some embodiments, the method further includes: releasing a CG resource with the resource use status being an idle status, in which the first message is used to indicate that the resource use status of the CG resource is the idle status.

In some embodiments, the method further includes: not using the CG resource within a specified time range; or being capable of using the CG resource outside a specified time range.

In some embodiments, the specified time range is a time range determined according to a time of sending the first message and a protocol-agreed parameter.

In some embodiments, the first message includes a time parameter, and the specified time range is a time range determined according to the time parameter, or the specified time range is a time range determined according to a time of sending the first message and the time parameter.

In some embodiments, the first message includes at least one time parameter, and each time parameter corresponds to one CG resource; or the first message includes one time parameter, and the time parameter corresponds to a plurality of CG resources.

In some embodiments, the resource use status is an idle status and/or a non-idle status.

In some embodiments, the first message includes at least one resource use status parameter, and the resource use status parameter is used to indicate a use status corresponding to part or all of the CG resources.

In some embodiments, the CG resource is a resource shared by the terminal device with other terminal devices.

In some embodiments, the method further includes: receiving a second message sent by the network device, in which the second message includes resource information for instructing the terminal device to determine the CG resource; and determining the CG resource according to the resource information.

In some embodiments, the resource information includes at least one of: physical uplink shared channel (PUSCH) time domain resource configuration information; PUSCH frequency domain resource configuration information; CG PUSCH transmission timing; CG resource index; or CG resource information.

According to a second aspect of embodiments of the present disclosure, there is provided a method for determining a configured grant (CG) resource, which is performed by a network device and includes: receiving a first message sent by a terminal device; and determining a resource use status of at least one configured grant (CG) resource according to the first message, in which the CG resource is a CG resource allocated by the network device to the terminal device.

In some embodiments, the method further includes: allocating the CG resource to other terminal devices for use according to the first message.

In some embodiments, the method further includes: allocating the CG resource to other terminal devices for use within a specified time range, or not allocating the CG resource to other terminal devices for use outside a specified time range.

In some embodiments, the specified time range is a time range determined according to a time of receiving the first message and a protocol-agreed parameter.

In some embodiments, the first message includes a time parameter, and the specified time range is a time range determined according to the time parameter, or the specified time range is a time range determined according to a time of receiving the first message and the time parameter.

In some embodiments, the first message includes at least one time parameter, and each time parameter corresponds to one CG resource; or the first message includes one time parameter, and the time parameter corresponds to a plurality of CG resources.

In some embodiments, the resource use status is an idle status and/or a non-idle status.

In some embodiments, the first message includes at least one resource use status parameter, and the resource use status parameter is used to indicate a use status corresponding to part or all of the CG resources.

In some embodiments, the method further includes: determining that the resource use status of the CG resource is an idle status in a case where no wireless signal is received from the terminal device through the CG resource.

In some embodiments, the method further includes: determining resource information of at least one CG resource configured for the terminal device; and sending a second message to the terminal device, in which the second message includes resource information for instructing the terminal device to determine the CG resource.

In some embodiments, the resource information includes at least one of: physical uplink shared channel (PUSCH) time domain resource configuration information; PUSCH frequency domain resource configuration information; CG PUSCH transmission timing; CG resource index; or CG resource information.

According to a third aspect of embodiments of the present disclosure, there is provided an apparatus for determining a configured grant (CG) resource, which includes: a transmitting module configured to send a first message to a network device, in which the first message is used to indicate a resource use status of at least one configured grant (CG) resource.

According to a fourth aspect of embodiments of the present disclosure, there is provided an apparatus for determining a configured grant (CG) resource, which includes: a receiving module configured to receive a first message sent by a terminal device; and a processing module configured to determine a resource use status of at least one configured grant (CG) resource according to the first message, in which the CG resource is a CG resource allocated by the apparatus to the terminal device for use.

According to a fifth aspect of embodiments of the present disclosure, there is provided a communication device, which includes: a processor; and a memory configured to store instructions executable by the processor, in which the processor is configured to perform steps of the method for determining a configured grant (CG) resource as provided in the first aspect of the present disclosure.

According to a sixth aspect of embodiments of the present disclosure, there is provided a communication device, which includes: a processor; and a memory configured to store instructions executable by the processor, in which the processor is configured to perform steps of the method for determining a configured grant (CG) resource as provided in the second aspect of the present disclosure.

According to a seventh aspect of embodiments of the present disclosure, there is provided a communication system, which includes: a terminal device capable of performing the method for determining a configured grant (CG) resource as provided in the first aspect of the present disclosure; and a network device capable of performing the method for determining a configured grant (CG) resource as provided in the second aspect of the present disclosure.

The technical solution provided by embodiments of the present disclosure may include the following beneficial effect: the terminal device may send a first message to a network device, the first message may be used to indicate a resource use status of at least one configured grant (CG) resource, to facilitate the network device in using and scheduling the CG resource according to the resource use status, and improve the use flexibility of the CG resource.

It should be understood that the forgoing general description and the detailed description hereinafter are only illustrative and explanatory, and cannot limit the present disclosure.

### BRIEF DESCRIPTION OF THE DRAWINGS

The accompanying drawings herein are incorporated into the specification and constitute a part of the specification. Theses accompanying drawings illustrate embodiments conform to the present disclosure and are used to explain the principles of the present disclosure together with the specification.
FIG. 1 is a schematic diagram of a communication system illustrated according to an illustrative embodiment.
FIG. 2 is a flow chart of a method for determining a configured grant (CG) resource illustrated according to an illustrative embodiment.
FIG. 3 is a flow chart of a method for determining a configured grant (CG) resource illustrated according to an illustrative embodiment.
FIG. 4 is a flow chart of a method for determining a configured grant (CG) resource illustrated according to an illustrative embodiment.
FIG. 5 is a flow chart of a method for determining a configured grant (CG) resource illustrated according to an illustrative embodiment.
FIG. 6 is a flow chart of a method for determining a configured grant (CG) resource illustrated according to an illustrative embodiment.
FIG. 7 is a flow chart of a method for determining a configured grant (CG) resource illustrated according to an illustrative embodiment.
FIG. 8 is a flow chart of a method for determining a configured grant (CG) resource illustrated according to an illustrative embodiment.
FIG. 9 is a flow chart of a method for determining a configured grant (CG) resource illustrated according to an illustrative embodiment.
FIG. 10 is a flow chart of a method for determining a configured grant (CG) resource illustrated according to an illustrative embodiment.
FIG. 11 is a flow chart of a method for determining a configured grant (CG) resource illustrated according to an illustrative embodiment.
FIG. 12 is a flow chart of a method for determining a configured grant (CG) resource illustrated according to an illustrative embodiment.
FIG. 13 is a block diagram of an apparatus for determining a configured grant (CG) resource illustrated according to an illustrative embodiment.
FIG. 14 is a block diagram of an apparatus for determining a configured grant (CG) resource illustrated according to an illustrative embodiment.
FIG. 15 is a block diagram of a communication device illustrated according to an illustrative embodiment.

### DETAILED DESCRIPTION

Illustrative embodiments will be illustrated in detail herein, and the examples thereof are shown in the accompanying drawings. When the following description refers to the accompanying drawings, unless otherwise specified, the same or similar elements are denoted by the same numerals in the different accompanying drawings. Implementations described in the illustrative embodiments do not represent all implementations consistent with the present disclosure. On the contrary, they are merely examples of an apparatus and a method consistent with some aspects of the present disclosure, as elaborated in the appended claims.

It should be noted that all actions to obtain signals, information or data in the present disclosure are performed in compliance with the corresponding data protection regulations and policies of the country in which they are located, and with authorization granted by the owner of the corresponding device.

In the description of the present disclosure, the use of terms such as "first", "second", etc. is used to distinguish between similar objects and need not be construed as a particular order or sequence. Further, in the absence of any explanation to the contrary, in the description with reference to the accompanying drawings, the same reference numeral in the different accompanying drawings indicates the same elements.

In the description of the present disclosure, "a plurality of" means two or more than two, and other quantifiers are similar. "At least one", "one or more" or similar expressions refer to any combination of these items, including any combination of single or plural items. For example, at least one may denote any number, and for another example, one or more of a, b, and c may denote: a, b, c, a-b, a-c, b-c, or a-b-c, where a, b, and c may be single or plural. The term "and/or" describes the association relationship of the associated objects, and means that there can be three types of relationships. For example, A and/or B, can mean that A exists alone, A and B exist at the same time, and B exists alone, where A and B may be single or plural. The character "/" indicates that the associated objects before and after it are an "or" relationship. The singular form "a", "the" and "this" is also intended to include the plural form, unless other meanings are explicitly expressed in the context.

Although the operations or steps are described in a specific order in the drawings or embodiments of the present disclosure, it should not be construed as requiring that the operations or steps be performed in the specific order shown or in a serial order, or requiring that all operations or steps shown be performed to obtain the desired result. In embodiments of the present disclosure, the operations or steps may be performed in any order without contradiction; the operations or steps may be performed in parallel; part of the operations or steps may be performed; or the operations or steps in multiple embodiments or accompanying drawings may be combined arbitrarily, which is not limited by the present disclosure.

An implementation environment for embodiments of the present disclosure is first described below.

The technical solutions of the embodiments of the present application can be applied to various communication systems. The communication system may include one or more of the 4th Generation (4G) communication system, the 5th Generation (5G) communication system, and other future wireless communication systems such as 6G. The communication system may also include one or more of a public land mobile network (PLMN) network, a device-to-device (D2D) communication system, a machine to machine (M2M) communication system, an internet of things (IoT) communication system, a vehicle-to-everything (V2X) communication system, or other communication systems.

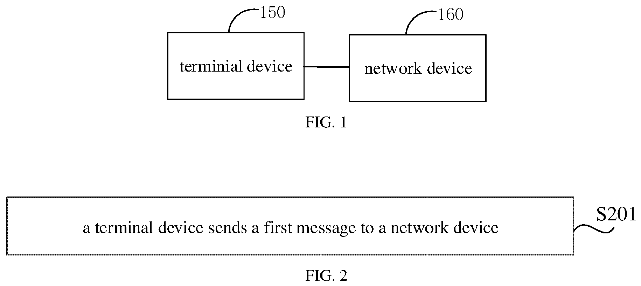

FIG. 1 is a schematic diagram of a communication system illustrated according to an illustrative embodiment. As illustrated in FIG. 1, the communication system may include a terminal device 150 and a network device 160. The communication system may be used to support 4G network access technologies, such as long term evolution (LTE) access technologies, or 5G network access technologies, such as new radio access technology (RAT), or other future wireless communication technologies. It should be noted that in the communication system, the number of both network devices and terminal devices may be one or more, and the number of network devices and terminal devices of the communication system shown in FIG. 1 is only an adaptive example, which is not limited by the present disclosure.

The network device in FIG. 1 may be used to support terminal access, for example, the network device may be an evolutionary Node B (eNB, or eNodeB) in LTE; the network device may also be the next generation Node B (gNB, or gNodeB) in a 5G network; the network device may also be the NG-Radio Access Network (NG-RAN) device in the 5G network; the network device may also be the base station, Broadband Network Gateway (BNG), aggregation switch, or non-3GPP access device in the future evolved Public Land Mobile Network (PLMN). Optionally, the network device in embodiments of the present disclosure may include various forms of base stations, such as: macro base stations, micro base stations (also referred to as small stations), relay stations, access points, 5G base stations or future base stations, satellites, transmitting and receiving point (TRP), transmitting point (TP), mobile switching centers, and device-to-device (D2D), machine-to-machine (M2M), internet of things (IoT), vehicle-to-everything (V2X), or other devices that assume a base station function in communications, etc., which is not specifically limited by embodiments of the present disclosure. For convenience of description, in all embodiments of the present disclosure, devices providing wireless communication functions for terminal devices are collectively referred to as network devices or base stations.

The terminal device in FIG. 1 may be an electronic device that provides voice and/or data connectivity, for example, the terminal device may also be referred to as user equipment (UE), subscriber unit, mobile station, station, terminal, etc. By way of example, the terminal device may include a smartphone, a smart wearable device, a smart speaker, a smart tablet, a wireless modem, a wireless local loop (WLL) station, a personal digital assistant (PDA), a customer premise equipment (CPE), and the like. With the development of wireless communication technology, devices that may be accessed to a communication system, that may communicate with a network device of a communication system, that may communicate with other objects through a communication system, or that may communicate directly between two or more devices may be the terminal devices in embodiments of the present disclosure; for example, terminals and automobiles in intelligent transportation, household devices in a smart home, power meter reading instruments in smart grids, voltage monitoring instruments, environmental monitoring instruments, video monitoring instruments in intelligent security networks, cash registers, and the like. In embodiments of the present disclosure, the terminal device may communicate with a network device. A plurality of terminal devices may also communicate with each other. The terminal device may be static and fixed or mobile, which is not limited by the present disclosure.

In some embodiments of the present disclosure, the terminal device and the network device described above may support grant-free uplink scheduling, and the resource used for the grant-free uplink scheduling may be a configured grant (CG) resource.

In an implementation, the network device may pre-configure all information corresponding to the CG resource used for uplink transmission for the terminal device, and the terminal device may autonomously use the CG resource for the uplink transmission without the need for scheduling by the network device, saving the scheduling resource and reducing the uplink service delay. For example, the network device configures at least one CG resource to the terminal device via a second message (e.g., RRC signaling or other message), and the second message may contain all information necessary to schedule the CG resource. The terminal device, upon receiving the second message sent by the network device, may autonomously initiate an uplink transmission on the CG resource without scheduling by the network device.

In another implementation, the network device may pre-configure all information corresponding to the CG resource used for uplink transmission for the terminal device, and the terminal device may subsequently autonomously use the CG resource for the uplink transmission after activation by the network device, saving the scheduling resource and reducing the uplink service delay. For example, the network device configures the at least one CG resource to the terminal device through a second message (e.g., RRC signaling or other message), the second message may contain all information necessary for scheduling all of the CG resources, and the network device may send a third message (e.g., an activating DCI indication, a MAC CE, or other message) to the terminal device to activate a specified CG resource of the at least one CG resource. The specified CG resource may be one or more, e.g., the specified CG resource may be a subset or the full set of the at least one CG resource described above. The terminal device, upon receiving the third message sent by the network device, may autonomously initiate an uplink transmission on the specified CG resource without scheduling by the network device.

In another implementation, the network device may pre-configure part of the information corresponding to the CG resource used for uplink transmission for the terminal device, and the terminal device may subsequently autonomously use the CG resource for the uplink transmission after activation by the network device, saving the scheduling resource and reducing the uplink service delay. For example, the network device configures the at least one CG resource to the terminal device through a second message (e.g., RRC signaling or other message), the second message may contain part of the information necessary for scheduling the CG resource, and the network device may send a third message (e.g., an activating DCI indication, or other message) to the terminal device to activate a specified CG resource of the at least one CG resource, and to complement all of the information of the first CG resource. For example, the third message may include information other than the part of the information described above in all information corresponding to the specified CG resource. The specified CG resource may be one or more, e.g., the specified CG resource may be a subset or the full set of the at least one CG resource described above. The terminal device, upon receiving the third message sent by the network device, may autonomously initiate an uplink transmission on the specified CG resource without scheduling by the network device.

In the related art, the use and scheduling of the CG resource is relatively simple and cannot adapt to the needs of new business. By way of example, the communication system described above may also support XR (e.g. Augmented Reality (AR) and/or Virtual Reality (VR)) service, the XR service is different from the three existing typical services of Ultra-Reliable Low-Latency Communications (URLLC), Enhanced Mobile Broadband (eMBB), and enhanced Machine-Type Communication (eMTC), and the XR service is characterized by periodicity, large throughput requirement and short delay requirement. In order to support the XR service, it is necessary to optimize for the management and scheduling of CG resources.

FIG. 2 is a flow chart of a method for determining a configured grant (CG) resource illustrated according to an illustrative embodiment. The method may be performed by a terminal device in the communication system described above. As illustrated in FIG. 2, the method may include following steps.

In S201, the terminal device sends a first message to a network device.

In some embodiments, the first message may be used to indicate a resource use status of at least one configured grant (CG) resource.

In other embodiments, the first message may be used to instruct the terminal device to release the CG resource.

In still other embodiments, the first message may be used to instruct the terminal device not to use the CG resource within a specified time range.

In yet other embodiments, the first message may be used to instruct the terminal device to use the CG resource outside a specified time range.

In yet other embodiments, the first message may be used to instruct the terminal device to use the CG resource within a specified time range.

In yet other embodiments, the first message may be used to instruct the terminal device not to use the CG resource outside a specified time range.

It should be noted that the specified time range described above may be a time range agreed upon by the protocol, a time range notified by the terminal device to the network device, or a time range notified by the network device to the terminal device, which is limited by the present disclosure. The specified time range may be any time range, by way of example, the specified time range may be N consecutive symbols after sending the first message, and N may be any positive integer, e.g., N may be 4, 7, or 14; the specified time range may also be M consecutive slots after sending the first message, and M may be any positive integer, e.g., M may be 1, 2, 4, 8, 16, or 32.

In some embodiments, the first message may include a radio resource control (RRC) message, a media access control control element (MAC CE), an uplink control information (UCI), or any of the other messages sent by the terminal device to the network device.

In some embodiments, the resource use status may include an idle status or a non-idle status.

In other embodiments, the resource use status may include an occupied status or a non-occupied status.

In still other embodiments, the resource use status may include an idle status or an occupied status.

It should be noted that the resource use status may also include other statuses, which is not limited by the present disclosure. By way of example, the resource use status corresponding to the CG resource may be used to indicate that: the CG resource is being used by the terminal device for an uplink transmission, or the CG resource will be used by the terminal device within a specified time range for an uplink transmission, or the CG resource is not used by the terminal device for an uplink transmission, or the CG resource is not used by the terminal device within a specified time range for an uplink transmission. The specified time range described above may be a time in the future, for example it may be a time range after a current moment or a moment of sending the first message.

In an implementation, the idle status described above may be used to represent that the CG resource is not used by the terminal device for an uplink transmission, or the CG resource is not used by the terminal device within a specified time range for an uplink transmission, or the non-idle status described above may be used to represent that the CG resource is being used by the terminal device for an uplink transmission, or the CG resource will be used by the terminal device within a specified time range for an uplink transmission.

The at least one CG resource described above may be one or more CG resources configured by the network device for the terminal device. By way of example, the CG resource described above may include all CG resources configured for the terminal device, or may include part of all CG resources configured for the terminal device. By way of example, the CG resource may include at least one of:
all CG resources configured for the terminal device;
all activated CG resources configured for the terminal device;
all unactivated CG resources configured for the terminal device;
all available CG resources configured for the terminal device: for example, CG resources capable of being used directly after the network device is configured for the terminal device;
all unavailable CG resources configured for the terminal device: for example, CG resources configured by the network device with some parameters to the terminal device and not capable of being used directly;
all CG resources capable of being shared by other terminal devices and configured for the terminal device: for example, the CG resources of the UE-share type;
all CG resources not capable of being shared by other terminal devices and configured for the terminal device: for example, the CG resources of the UE-specific type; and
an CG resource indicated by the network device among all CG resources configured for the terminal device: for example, it may be a CG resource indicated by indication information in a message sent by the network device to the terminal device, and the indication information may include a CG resource index.

In some embodiments, the first message may indicate resource use statuses of a plurality of CG resources, and the resource use statuses corresponding to the different CG resources may all be the same, may not be completely the same, or may not be the same at all, which is not by the present disclosure.

Taking an example of the resource use status including an idle status and a non-idle status, in an implementation, the first message may be used to indicate only CG resources in the idle status, and the resource use status of CG resources not indicated by the first message may be a non-idle status. In another implementation, the first message may also indicate the resource use statuses of all CG resources.

In some embodiments, after receiving the first message, the network device may determine the resource use status of at least one CG resource according to the first message. Additionally, the network device may allocate or schedule the CG resource according to the resource use status, for example, the CG resource in the idle status may be allocated for use by other terminal devices.

By using the method described above, the terminal device may send a first message to a network device, the first message may be used to indicate a resource use status of at least one configured grant (CG) resource, to facilitate the network device in using and scheduling the CG resource according to the resource use status, and improve the use flexibility of the CG resource.

In some embodiments, the terminal device may indicate a resource use status of at least one CG resource through a message type of the first message.

By way of example, in a case where the message type of the first message is a first type, the resource use status of the CG resource may be an idle status; in a case where the message type of the first message is not a first type or the message type of the first message is a second type, the resource use status of the CG resource may be a non-idle status. The first type and the second type may be pre-set types, e.g., they may be protocol-agreed types.

In other embodiments, the terminal device may indicate the resource use status of at least one CG resource according to a resource use status parameter in the first message. By way of example:

In an implementation, the first message may include one resource use status parameter; and the resource use status parameter may be used to indicate a use status of the plurality of CG resources.

By way of example, the terminal device is configured with a plurality of CG resources, the plurality of CG resources have the same resource use status (e.g., all are in an idle status, or all are in a non-idle status), and there may be one resource use status parameter carried in the first message, and the one resource use status parameter may be used to indicate the resource use status of the plurality of CG resources.

In another implementation, the first message may include at least one resource use status parameter; and the resource use status parameter may be used to indicate a use status corresponding to part or all of the CG resources.

The number of resource use status parameters carried in the first message is not limited to the number of CG resources configured for the terminal device.

For example, the number of resource use status parameters carried in the first message may be equal to the number of CG resources, and the resource use status parameters may be used to indicate a resource use status of each CG resource in the plurality of CG resources, i.e., the CG resources and the resource use status parameters are one-to-one correspondence.

For another example, the number of resource use status parameters carried in the first message may be less than the number of CG resources, and the resource use status parameters may be used to indicate the resource use status of part of the plurality of CG resources, and each resource use status parameter corresponds to one CG resource.

For another example, the number of resource use status parameters carried in the first message may be greater than the number of CG resources, and part of the resource use status parameters as reserved parameters is not used, and each resource use status parameter other than the reserved parameters may correspond to one CG resource.

In some embodiments, the resource use status parameter may be a parameter in a form of a combination of bits, e.g., the resource use status parameter may be a bitmap, and each bit in the bitmap represents a resource use status of one CG resource. For example, a value of 1 for the bit may indicate that the resource use status of the CG resource is an idle status, and a value of 0 for the bit may indicate that the resource use status of the CG resource is a non-idle status; and for another example, a value of 0 for the bit may indicate that the resource use status of the CG resource is an idle status, and a value of 1 for the bit may indicate that the resource use status of the CG resource is a non-idle status.

The CG resource indicated by the bitmap may include all CG resources configured for the terminal device, may include part of all CG resources, may include all activated CG resources of the terminal device, or may include part of the activated CG resources of the terminal device, which is not limited by the present disclosure.

By way of example, if the CG resource configured for the terminal device includes a first CG resource, a second CG resource, a third CG resource, and a fourth CG resource, the resource use status parameter may include at least four bits (which may be greater than or equal to four bits), in which each bit corresponds to one CG resource, for example, the resource use status parameter is binary 1001 and may be used to indicate that: the resource use status of the first CG resource and the fourth CG resource is a non-idle status; and the resource use status of the second CG resource and the third CG resource is an idle status; of course, it may be the other way around, the resource use status parameter is a binary 1001 and may be used to indicate that the resource use status of the first CG resource and the fourth CG resource is in an idle status; and the resource use status of the second CG resource and the third CG resource is in a non-idle status.

By way of example, if the activated CG resource of the terminal device includes a first CG resource, a second CG resource, a third CG resource, and a fourth CG resource, the resource use status parameter may include at least four bits (which may be greater than or equal to four bits), in which each bit corresponds to one CG resource, for example, the resource use status parameter is binary 1001 and may be used to indicate that: the resource use status of the first CG resource and the fourth CG resource is a non-idle status; and the resource use status of the second CG resource and the third CG resource is an idle status; of course, it may be the other way around, the resource use status parameter is a binary 1001 and may be used to indicate that the resource use status of the first CG resource and the fourth CG resource is in an idle status; and the resource use status of the second CG resource and the third CG resource is in a non-idle status.

In other embodiments, the resource use status parameter may be a parameter in the form of a composite index, the resource use status parameter includes at least one bit, and a decimal value corresponding to the bit may correspond to a different at least one CG resource.

By way of example, if the CG resource configured for the terminal device includes a first CG resource, a second CG resource, and a third CG resource, the resource use status parameter may contain any number of bits, and the resource use status parameter may correspond to any non-zero integer value. For example, the resource use status parameter is three bits, 000 for decimal 0, 001 for decimal 1, 010 for decimal 2, 011 for decimal 3, 100 for decimal 4, 101 for decimal 5, 110 for decimal 6, and 111 for decimal 7. A value of 0 for the resource use status parameter may be used to indicate that the resource use status of the first CG resource is an idle status, a value of 1 for the resource use status parameter may be used to indicate that the resource use status of the second CG resource is an idle status, a value of 2 for the resource use status parameter may be used to indicate that the resource use status of the third CG resource is an idle status, and a value of 3 for the resource use status parameter may be used to indicate that the resource use status of the first CG resource and the second CG resource is an idle status, the value of 4 for the resource use status parameter may be used to indicate that the resource use status of the second CG resource and the third CG resource is an idle status, and the value of 5 for the resource use status parameter may be used to indicate that the resource use status of the first CG resource, the second CG resource and the third CG resource is an idle status.

In other embodiments, the network device determines a status of the CG resource by whether or not the CG resource is received.

By way of example, the reception of the CG resource by the network device also means that the CG resource is non-idle, and all other CG resources not received are idle.

In this way, the terminal device may more flexibly determine the resource use status of at least one CG resource according to a resource use status parameter in the first message.

In some embodiments of the present disclosure, the CG resource described above may be determined by resource information, and the resource information may include any of following information:
PUSCH time domain resource configuration information, including but not limited to the number of PUSCH time domain symbols, a PUSCH time domain start symbol; for example, with the PUSCH time domain resource configuration information, a specified PUSCH time domain resource may be used as the CG resource.

PUSCH frequency domain resource configuration information, including but not limited to continuous frequency domain resources or non-continuous frequency domain resources; for example, with the PUSCH frequency domain resource configuration information, a specified PUSCH frequency domain resource may be used as the CG resource.

CG PUSCH transmission timing, including but not limited to a potential time-frequency resource location for the terminal device to send the PUSCH, and a time-frequency resource location for the base station to listen to the PUSCH sent by the terminal device; for example, with the CG PUSCH transmission timing, the location information of the CG resource may be determined, and at least one CG PUSCH transmission timing may be configured within a CG resource transmission period.

CG resource index: the CG resource index may uniquely identify a CG resource, and by way of example, the CG resource index may be an index or identifier allocated to each CG resource by the network device; and
CG resource information: the CG resource information may include information for determining a CG resource, by way of example, the CG resource information includes at least one of following information: periodicity, number of HARQ-processes (nrofHARQ-Processes), power-control, number of repetitions (repK), redundant version of repetitions (repK-RV), time domain resource, frequency domain resource, modulation coding scheme, antenna port, SRS resource indication, demodulation reference signal (DM-RS) or other CG resource related information.

In some embodiments of the present disclosure, the terminal device may also notify the network device of the resource use status of the CG resource in a protocol predefined form.

By way of example, in a case where a plurality of CG resources are configured for the terminal, and the network device receives a signal of one of the CG resources, it may be determined that the resource use statuses of the CG resources other than the CG resource receiving the signal are all an idle status. In this way, the network device may allocate the other CG resources with the resource use status being the idle status to other terminal devices for use, for example, it may allocate the other CG resources to the other terminals for use by dynamic scheduling; for another example, it may also notify the other CG resources to other terminal devices.

In this way, the terminal device may notify the network device of the resource use status of the CG resource in a protocol predefined form.

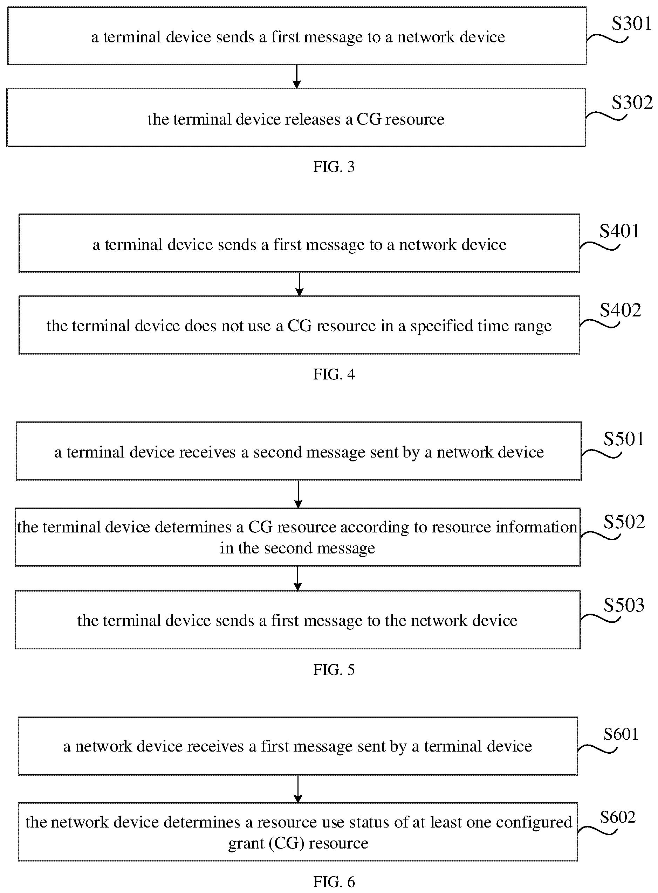

FIG. 3 is a flow chart of a method for determining a configured grant (CG) resource illustrated according to an illustrative embodiment. The method may be performed by a terminal device. As illustrated in FIG. 3, the method may include following steps.

In S301, the terminal device sends a first message to a network device.

In S302, the terminal device releases the CG resource.

In some embodiments, the terminal device may release at least one CG resource with the resource use status being an idle status, and the first message may be used to indicate that the resource use status of the at least one CG resource is an idle status.

In other embodiments, the terminal device may release at least one CG resource, and the first message may be used to indicate the at least one CG resource to be released by the terminal device.

The terminal device may release the GC resource in a variety of ways, as examples below.

In some embodiments, the terminal device may no longer use the CG resource, i.e., it may no longer use the CG resource from the time of sending the first message. In this way, the network device allocates the CG resource to other terminal devices for use according to indication of the first message.

In other embodiments, the terminal device may no longer use the CG resource after a specified time of sending the first message.

In an implementation, the specified time may be a time agreed upon by the protocol, the terminal device and the network device may pre-set the same specified time, the terminal device no longer uses the CG resource after the specified time of sending the first message, and the network device determines that the CG resource is in the idle status (that is, it is determined that the terminal device no longer uses the CG resource) after the specified time of receiving the first message. The network device may allocate the CG resource to other terminal devices for use.

In another implementation, the specified time may be a time reported by the terminal device to the network device. For example, the terminal device may carry the specified time in the first message described above, or report the specified time to the network device through other messages; the terminal device may no longer use the CG resource after the specified time of sending the first message, and the network device determines that the CG resource is in the idle status (that is, it is determined that the terminal device no longer uses the CG resource) after the specified time of receiving the first message. The network device may allocate the CG resource to other terminal devices for use.

In another implementation, the specified time may be a time notified by the network device to the terminal device.

In other embodiments, the terminal device may release the CG resource in the idle status and its subsequent CG resources.

In an implementation, the terminal device reports an idle CG resource through a first signaling, the first signaling includes but is not limited to UCI, and the terminal abandons a corresponding CG resource and CG resources with the same time-frequency domain configuration.

It should be noted that the S301 and S302 described above may be performed in series or in parallel in any order, which is not limited by the present disclosure.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the terminal device may notify the network device to release the CG resource through the first message.

FIG. 4 is a flow chart of a method for determining a configured grant (CG) resource illustrated according to an illustrative embodiment. The method may be performed by a terminal device. As illustrated in FIG. 4, the method may include following steps.

In S401, the terminal device sends a first message to a network device.

In S402, the terminal device does not use the CG resource within a specified time range.

In some embodiments, the first message may be used to indicate that the resource use status of the at least one CG resource within a specified time range is an idle status, and the terminal device may not use the CG resource with the resource use status being an idle status within the specified time range.

In other embodiments, the first message may be used to indicate that the at least one CG resource is not used by the terminal device within a specified time range, and the terminal device may not use the at least one CG resource within the specified time range.

By way of example, the terminal device may no longer send uplink data within the specified time range, or may send data using an uplink channel resource other than the CG resource.

In some embodiments, the specified time range may be a period of duration after sending the first message.

In other embodiments, the specified time range may be a periodic time range, e.g., a period of time within each period may be specified as the specified time range.

In an implementation, the specified time range may include a specified symbol in each slot, e.g., the specified time range may be the first 3 symbols in each slot, or the 5th to 7th symbols in each slot, or the 3rd and 10th symbols in each slot.

In another implementation, the specified time range may be a specified sub-frame of each frame. For example, the specified time range may be the first 2 sub-frames of each frame, or the 3rd to 5th sub-frames of each frame, or the 4th and 9th sub-frames of each frame.

In some embodiments, the terminal device may use the CG resource outside the specified time range.

For example, the terminal device may continue to use the CG resource after the first message is sent and the specified time range elapses. For another example, the terminal device may not use the CG resource within the specified time range after sending the first message, and may continue to use the CG resource after the specified time range.

In other embodiments, the terminal device may use the CG resource within the specified time range. For example, the terminal device may use the CG resource within the specified time range for an uplink transmission.

In other embodiments, the terminal device may not use the CG resource outside the specified time range.

The specified time range may be a time range agreed upon by the protocol, a time range notified by the terminal device to the network device, or a time range notified by the network device to the terminal device, which is limited by the present disclosure.

The specified time range may be any time range, by way of example, the specified time range may be N consecutive symbols after sending the first message, and N may be any positive integer, e.g., N may be 4, 7, or 14; the specified time range may also be M consecutive slots after sending the first message, and M may be any positive integer, e.g., M may be 1, 2, 4, 8, 16, or 32.

In some embodiments, the specified time range may be a time range determined according to a time of sending the first message and a protocol-agreed parameter.

In an implementation, the protocol-agreed parameter may include an agreed duration, and the specified time range may be determined by using the time of sending the first message as an agreed start time of the specified time range, and a sum of the time of sending the first message and the agreed duration as an end time of the specified time range.

In another implementation, the protocol-agreed parameter may include an agreed start time and the agreed duration, and the specified time range may be determined by using a sum of the time of sending the first message and a start time as an agreed start time of the specified time range, and a sum of the time of sending the first message and the agreed duration as an end time of the specified time range.

In other embodiments, the first message may include a time parameter, and the specified time range may be a time range determined according to the time parameter.

In an implementation, the time parameter may include an absolute time, and for example, the terminal device does not use the CG resource within the time range indicated by the absolute time.

In an implementation, the time parameter may include a period parameter and/or an idle timespan parameter, and the specified time range determined by the time parameter may be a periodic time range. For example, the period parameter may be used to indicate that the period of the specified time range is a slot, and the idle timespan parameter may be used to indicate that the specified time range includes a specified symbol in each slot. For another example, the period parameter may be used to indicate that the period of the specified time range is a frame, and the idle timespan parameter may be used to indicate that the specified time range includes a specified sub-frame in each frame.

In other embodiments, the first message may include a time parameter, and the specified time range may be a time range determined according to the time of sending the first message and the time parameter in the first message.

In an implementation, the time parameter may include a specified duration, and the specified time range may be determined by using the time of sending the first message as a specified start time of the specified time range, and a sum of the time of sending the first message and the specified duration as an end time of the specified time range.

In another implementation, the time parameter may include a specified start time and the specified duration, and the specified time range may be determined by using a sum of the time of sending the first message and a start time as a specified start time of the specified time range, and a sum of the time of sending the first message and the specified duration as an end time of the specified time range.

The time parameter in the first message described above may be one or more.

In some embodiments, the first message may include at least one time parameter, and each time parameter corresponds to one CG resource.

By way of example, different time parameters may indicate specified time ranges for different CG resources, and the time parameters for the plurality of CG resources configured for the terminal device may all be the same or may not be completely the same.

In other embodiments, the first message may include one time parameter, and the time parameter corresponds to a plurality of CG resources. For example, the time parameter may be used to indicate the specified time range for all CG resources configured for the terminal device, that is, all CG resources have the same specified time range.

It should be noted that the S401 and S402 described above may be performed in series or in parallel in any order, which is not limited by the present disclosure.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the terminal device may notify the network device of the idle CG resource within the specified time range through the first message.

FIG. 5 is a flow chart of a method for determining a configured grant (CG) resource illustrated according to an illustrative embodiment. The method may be performed by a terminal device. As illustrated in FIG. 5, the method may include following steps.

In S501, the terminal device receives a second message sent by the network device.

In some embodiments, the second message may include an RRC message, MAC CE, DCI or any of other messages sent by the network device to the terminal device.

In S502, the terminal device determines a CG resource according to resource information in the second message.

In some embodiments, the second message may include resource information for instructing the terminal device to determine the at least one CG resource. The resource information may be all or part of the information for the CG resource.

By way of example, the resource information may include at least one of following information: PUSCH time domain resource configuration information; PUSCH frequency domain resource configuration information; CG PUSCH transmission timing; a CG resource index; and CG resource information.

Regarding the specifics of the resource information, reference may be made to the description in the preceding embodiments of the present disclosure, which will not be repeated herein.

In an implementation, the second message may include all information corresponding to the at least one CG resource, and the terminal device, upon receiving the second message sent by the network device, may determine the CG resource and autonomously use the CG resource for an uplink transmission (that is, initiating the uplink transmission on the CG resource in a case where the network device does not perform the scheduling).

In another implementation, the second message may include all information corresponding to the at least one CG resource, and the terminal device, upon receiving the second message sent by the network device, may determine the CG resource, and upon receiving a third message sent by the network device, activate a specified CG resource of the at least one CG resource and autonomously use the specified CG resource for an uplink transmission. The specified CG resource may be one or more, e.g., the specified CG resource may be a subset or the full set of the at least one CG resource described above. The third message may be used to instruct the terminal device to activate the specified CG resource. The third message may also be an RRC message, MAC CE, DCI or any of other messages sent by the network device to the terminal device, and the third message may be different from the second message.

In another implementation, the second message may include part of the information corresponding to the at least one CG resource, and the terminal device, upon receiving the second message sent by the network device, may determine the CG resource, and upon receiving a third message sent by the network device, activate a specified CG resource of the at least one CG resource and autonomously use the specified CG resource for an uplink transmission. The specified CG resource may be one or more, e.g., the specified CG resource may be a subset or the full set of the at least one CG resource described above. The third message may include information other than the part of all information corresponding to the specified CG resource, and the third message may be used to instruct the terminal device to activate the specified CG resource. The third message may also be an RRC message, MAC CE, DCI or any of other messages sent by the network device to the terminal device, and the third message may be different from the second message.

In S503, the terminal device sends a first message to a network device.

The first message may be used to indicate a resource use status of at least one CG resource.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the terminal device may notify the network device of the idle CG resource within the specified time range through the first message.

In some embodiments of the present disclosure, the second message may also be used to instruct the terminal device to determine a resource type of the CG resource.

In some embodiments, the resource type may be used to indicate that the CG resource is a resource specific to the terminal device. By way of example, the resource type of the CG resource may be a UE-specific resource.

In other embodiments, the resource type may be used to indicate that the CG resource is a resource shared by the terminal device with other terminal devices. By way of example, the resource type of the CG resource may be a UE-share resource, and the UE-share resource may be shared by a plurality of terminal devices.

In some embodiments, the CG resource may be a resource shared by the terminal device with other terminal devices.

In an implementation, the terminal device may send the first message in a case where the CG resource is a resource shared by the terminal device with other terminal devices.

In another implementation, the terminal device may not send the first message in a case where the CG resource is a resource specific to the terminal device.

In this way, resource use status information can be sent only for the shared CG resource, which can save uplink resources.

FIG. 6 is a flow chart of a method for determining a configured grant (CG) resource illustrated according to an illustrative embodiment. The method may be performed by a network device in the communication system described above. As illustrated in FIG. 6, the method may include following steps.

In S601, the network device receives a first message sent by a terminal device.

In some embodiments, the first message may include an RRC message, MAC CE, UCI or any of other messages sent by the terminal device to the network device.

In S602, the network device determines a resource use status of at least one configured grant (CG) resource according to the first message.

The CG resource may be a CG resource configured by the network device to the terminal device.

The at least one CG resource may include all CG resources configured by the network device to the terminal device; or may include part of all CG resources configured by the network device to the terminal device. By way of example, the CG resource may include at least one of:
all CG resources configured for the terminal device;
all activated CG resources configured for the terminal device;
all unactivated CG resources configured for the terminal device;
all available CG resources configured for the terminal device: for example, CG resources capable of being used directly after the network device is configured for the terminal device;
all unavailable CG resources configured for the terminal device: for example, CG resources configured by the network device with some parameters to the terminal device and not capable of being used directly;
all CG resources capable of being shared by other terminal device and configured for the terminal device: for example, the CG resources of the UE-share type;
all CG resources not capable of being shared by other terminal device and configured for the terminal device: for example, the CG resources of the UE-specific type; and
an CG resource indicated by the network device among all CG resources configured for the terminal device: for example, it may be a CG resource indicated by indication information in a message sent by the network device to the terminal device, and the indication information may include a CG resource index.

In some embodiments, the resource use status may include an idle status or a non-idle status.

In other embodiments, the resource use status may include an occupied status or a non-occupied status.

In still other embodiments, the resource use status may include an idle status or an occupied status.

It should be noted that the resource use status may also include other statuses, which is not limited by the present disclosure. By way of example, the resource use status corresponding to the CG resource may be used to indicate that: the CG resource is being used by the terminal device for an uplink transmission, or the CG resource will be used by the terminal device within a specified time range for an uplink transmission, or the CG resource is not used by the terminal device for an uplink transmission, or the CG resource is not used by the terminal device within a specified time range for an uplink transmission. The specified time range described above may be a time in the future, for example it may be a time range after a current moment or a moment of sending the first message.

In an implementation, the idle status described above may be used to represent that the CG resource is not used by the terminal device for an uplink transmission, or the CG resource is not used by the terminal device within a specified time range for an uplink transmission, or the non-idle status described above may be used to represent that the CG resource is being used by the terminal device for an uplink transmission, or the CG resource will be used by the terminal device within a specified time range for an uplink transmission.

In some embodiments, the first message may indicate resource use statuses of a plurality of CG resources, and the resource use statuses corresponding to the different CG resources may all be the same, may not be completely the same, or may not be the same at all, which is not by the present disclosure.

By using the method described above, the network device may receive a first message sent by a terminal device, and determine a resource use status of at least one configured grant (CG) resource according to the first message, to improve the use flexibility of the CG resource.

In some embodiments, the network device may determine the resource use status of at least one CG resource according to the first message.

In other embodiments, the network device may determine that the CG resource is released by the terminal device according to the first message.

In still other embodiments, the network device may determine that the terminal device does not use the CG resource within a specified time range according to the first message.

In yet other embodiments, the network device may determine that the terminal device uses the CG resource outside a specified time range according to the first message.

In yet other embodiments, the network device may determine that the terminal device uses the CG resource within a specified time range according to the first message.

In yet other embodiments, the network device may determine that the terminal device does not use the CG resource outside a specified time range according to the first message.

It should be noted that the specified time range described above may be a time range agreed upon by the protocol, a time range notified by the terminal device to the network device, or a time range notified by the network device to the terminal device, which is limited by the present disclosure. The specified time range may be any time range, by way of example, the specified time range may be N consecutive symbols after sending the first message, and N may be any positive integer, e.g., N may be 4, 7, or 14; the specified time range may also be M consecutive slots after sending the first message, and M may be any positive integer, e.g., M may be 1, 2, 4, 8, 16, or 32.

In some embodiments, the network device may determine the resource use status of at least one CG resource according to the message type of the first message.

By way of example, in a case where the message type of the first message is a first type, the resource use status of the CG resource may be an idle status; in a case where the message type of the first message is not a first type or the message type of the first message is a second type, the resource use status of the CG resource may be a non-idle status. The first type and the second type may be pre-set types, e.g., they may be protocol-agreed types.

In other embodiments, the network device may determine the resource use status of at least one CG resource according to a resource use status parameter in the first message. By way of example:
In an implementation, the first message may include one resource use status parameter; and the resource use status parameter may be used to indicate use statuses of the plurality of CG resources.

By way of example, the terminal device is configured with a plurality of CG resources, the plurality of CG resources have the same resource use status (e.g., all are in an idle status, or all are in a non-idle status), and there may be one resource use status parameter carried in the first message, and the one resource use status parameter may be used to indicate the resource use statuses of the plurality of CG resources.

In another implementation, the first message may include at least one resource use status parameter; and the resource use status parameter may be used to indicate a use status corresponding to part or all of the CG resources.

The number of resource use status parameters carried in the first message may be less than or equal to the number of CG resources configured for the terminal device.

For example, the number of resource use status parameters carried in the first message may be equal to the number of CG resources, and the resource use status parameters may be used to indicate a resource use status of each CG resource in the plurality of CG resources, i.e., the CG resources and the resource use status parameters are one-to-one correspondence.

For another example, the number of resource use status parameters carried in the first message may be less than the number of CG resources, and the resource use status parameters may be used to indicate the resource use status of part of the plurality of CG resources, and each resource use status parameter corresponds to one CG resource.

For another example, the number of resource use status parameters carried in the first message may be greater than the number of CG resources, and part of the resource use status parameters as reserved parameters is not used, and each resource use status parameter other than the reserved parameters may correspond to one CG resource.

In some embodiments, the resource use status parameter may be a parameter in a form of a combination of bits, e.g., the resource use status parameter may be a bitmap, and each bit in the bitmap represents a resource use status of one CG resource.

In other embodiments, the resource use status parameter may be a parameter in the form of a composite index, a different value of the resource use status parameter may correspond to a different at least one CG resource.

It should be noted that regarding the specific implementation of the bit combination form and the composite index form, reference may be made to the description in the preceding embodiments of the present disclosure, which will not be repeated herein.

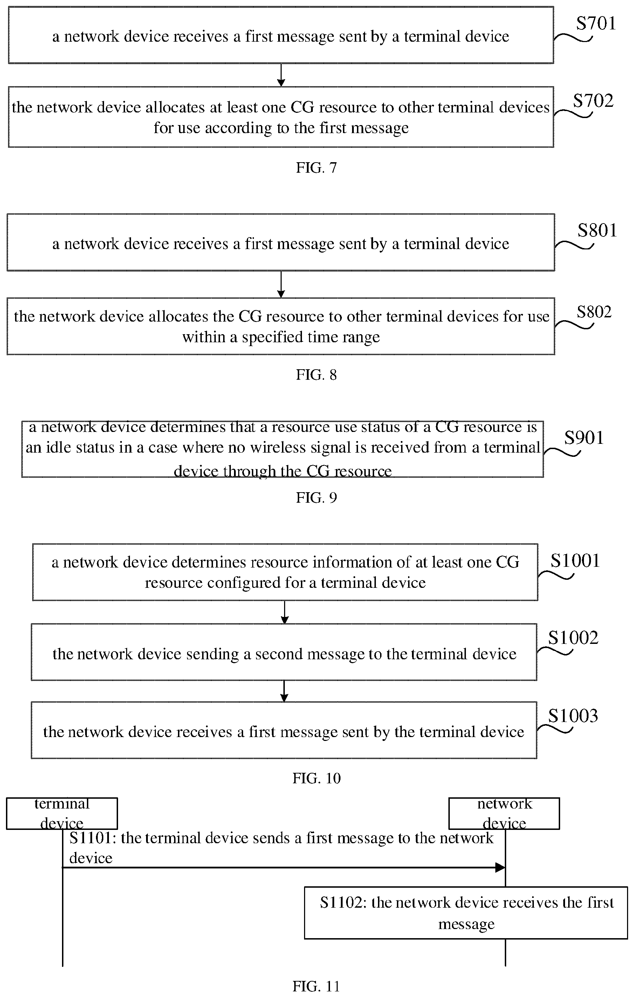

FIG. 7 is a flow chart of a method for determining a configured grant (CG) resource illustrated according to an illustrative embodiment. The method may be performed by a network device. As illustrated in FIG. 7, the method may include following steps.

In S701, the network device receives a first message sent by a terminal device.

In S702, the network device allocates the at least one CG resource to other terminal devices for use according to the first message.

The at least one CG resource may be a resource configured by the network device to the terminal device.

By way of example, the network device may allocate the CG resource to other terminals by dynamic scheduling for use; and the network device may also allocate the CG resource to other terminal devices by grant-free uplink for use.

In some embodiments, the first message may be used to indicate that the resource use status of the at least one CG resource is an idle status, and the network device may determine that the resource use status of the at least one CG resource is an idle status according to the first message, and may allocate the CG resource with the resource use status being an idle status to other terminal devices for use.

In other embodiments, the first message may be used to indicate that the at least one CG resource is released by the terminal device, and the network device may determine that the at least one CG resource is released by the terminal device according to the first message, and may allocate the released CG resource to other terminal devices for use.

The network device allocates the CG resource to other terminal devices for use in a variety of ways, and examples are as follow.

In some embodiments, after receiving the first message, the network device may allocate the CG resource to other terminal devices for use.

In other embodiments, after the specified time of receiving the first message, the network device may allocate the CG resource to other terminal devices for use.

In an implementation, the specified time may be a time agreed upon by the protocol.

In another implementation, the specified time may be a time reported by the terminal device to a network side.

In another implementation, the specified time may be a time notified by the network device to the terminal device.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the network device may allocate the CG resource to other terminal devices for use in a case where the resource use status of the CG resource is an idle status, increasing the utilization rate of the CG resource.

FIG. 8 is a flow chart of a method for determining a configured grant (CG) resource illustrated according to an illustrative embodiment. The method may be performed by a network device. As illustrated in FIG. 8, the method may include following steps.

In S801, the network device receives a first message sent by a terminal device.

In S802, the network device allocates the CG resource to other terminal devices for use within the specified time range.

By way of example, within the specified time range, the network device may allocate the CG resource to other terminals by dynamic scheduling for use; and within the specified time range, the network device may also allocate the CG resource to other terminal devices by grant-free uplink for use.

In some embodiments, the first message may be used to indicate that the resource use status of the at least one CG resource within the specified time range is an idle status, and the network device may determine that the resource use status of the at least one CG resource is an idle status according to the first message, and may allocate the CG resource with the resource use status being an idle status to other terminal devices for use within the specified time range.

In other embodiments, the first message may be used to indicate that the at least one CG resource is not used by the terminal device within the specified time range, and the network device may determine that the at least one CG resource is not used by the terminal device within the specified time range according to the first message, and may allocate the CG resource to other terminal devices for use.

In some embodiments, the specified time range may be a period of duration after receiving the first message.

In other embodiments, the specified time range may be a periodic time range, e.g., a period of time within each period may be specified as the specified time range.

In an implementation, the specified time range may include the specified symbol in each slot.

In another implementation, the specified time range may be a specified sub-frame of each frame.

In some embodiments, the network device allocates the CG resource to other terminal devices for use outside the specified time range.

In some embodiments, the network device may allocate the CG resource to other terminal devices for use within a specified time range, or may not allocate the CG resource to other terminal devices for use outside a specified time range.

In some embodiments, the terminal device may not allocate the CG resource to other terminal devices for use within a specified time range, or may allocate the CG resource to other terminal devices for use outside a specified time range.

The specified time range may be a time range agreed upon by the protocol, a time range notified by the terminal device to the network device, or a time range notified by the network device to the terminal device, which is limited by the present disclosure.

The specified time range may be any time range, by way of example, the specified time range may be N consecutive symbols after sending the first message, and N may be any positive integer, e.g., N may be 4, 7, or 14; the specified time range may also be M consecutive slots after sending the first message, and M may be any positive integer, e.g., M may be 1, 2, 4, 8, 16, or 32.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the network device may allocate the CG resource to other terminal devices for use within a specified time range in a case where the resource use status of the CG resource is an idle status, increasing the utilization rate of the CG resource.

In some embodiments, the specified time range may be a time range determined according to a time of receiving the first message and a protocol-agreed parameter.

In an implementation, the protocol-agreed parameter may include an agreed duration, and the specified time range may be determined by using the time of receiving the first message as an agreed start time of the specified time range, and a sum of the time of receiving the first message and the agreed duration as an end time of the specified time range.

In another implementation, the protocol-agreed parameter may include an agreed start time and the agreed duration, and the specified time range may be determined by using a sum of the time of receiving the first message and a start time as an agreed start time of the specified time range, and a sum of the time of receiving the first message and the agreed duration as an end time of the specified time range.

In other embodiments, the first message may include a time parameter, and the specified time range may be a time range determined according to the time parameter.

In an implementation, the time parameter may include an absolute time, and for example, the terminal device does not use the CG resource within the time range indicated by the absolute time.

In an implementation, the time parameter may include a period parameter and/or an idle timespan parameter, and the specified time range determined by the time parameter may be a periodic time range. For example, the period parameter may be used to indicate that the period of the specified time range is a slot, and the idle timespan parameter may be used to indicate that the specified time range includes a specified symbol in each slot. For another example, the period parameter may be used to indicate that the period of the specified time range is a frame, and the idle timespan parameter may be used to indicate that the specified time range includes a specified sub-frame in each frame.

In other embodiments, the first message may include a time parameter, and the specified time range may be a time range determined according to the time of receiving the first message and the time parameter in the first message.

In an implementation, the time parameter may include a specified duration, and the specified time range may be determined by using the time of receiving the first message as a specified start time of the specified time range, and a sum of the time of receiving the first message and the specified duration as an end time of the specified time range.

In another implementation, the time parameter may include a specified start time and the specified duration, and the specified time range may be determined by using a sum of the time of receiving the first message and a start time as a specified start time of the specified time range, and a sum of the time of receiving the first message and the specified duration as an end time of the specified time range.

The time parameter in the first message described above may be one or more.

In some embodiments, the first message may include at least one time parameter, and each time parameter corresponds to one CG resource.

By way of example, different time parameters may indicate specified time ranges for different CG resources, and the time parameters for the plurality of CG resources configured for the terminal device may all be the same or may not be completely the same.

In other embodiments, the first message may include one time parameter, and the time parameter corresponds to a plurality of CG resources. For example, the time parameter may be used to indicate the specified time range for all CG resources configured for the terminal device, that is, all CG resources have the same specified time range.

In this way, the network device may determine the specified time range in any one or more of the ways described above.

FIG. 9 is a flow chart of a method for determining a configured grant (CG) resource illustrated according to an illustrative embodiment. The method may be performed by a network device. As illustrated in FIG. 9, the method may include following steps.

In S901, the network device determines that the resource use status of the CG resource is an idle status in a case where no wireless signal is received from the terminal device through the CG resource.

By way of example, in a case where a plurality of CG resources are configured for the terminal, and the network device receives a signal of one of the CG resources, it may be determined that the resource use statuses of the CG resources other than the CG resource receiving the signal are all an idle status.

In some embodiments, the network device may allocate the other CG resources with the resource use status being an idle status to other terminal devices for use. For example, the network device may allocate the other CG resources to other terminals by dynamic scheduling for use; and for another example, the network device may also allocate the other CG resources to other terminal devices by grant-free uplink for use.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the network device may determine the resource use status of the CG resource according to whether or not the wireless signal is received.

In some embodiments of the present disclosure, the network device may allocate the CG resource to the terminal devices for use in a case of not receiving a wireless signal sent by the terminal device through the CG resource.

FIG. 10 is a flow chart of a method for determining a configured grant (CG) resource illustrated according to an illustrative embodiment. The method may be performed by a network device. As illustrated in FIG. 10, the method may include following steps.

In S1001, the network device determines resource information of at least one CG resource configured for the terminal device.

The resource information may include any of following information:
PUSCH time domain resource configuration information;
PUSCH frequency domain resource configuration information;
CG PUSCH transmission timing;
CG resource index; or
CG resource information.

In S1002, the network device sends a second message to a terminal device.

In some embodiments, the second message may include an RRC message, MAC CE, DCI or any of other messages sent by the network device to the terminal device.

In some embodiments, the second message may include resource information for instructing the terminal device to determine the CG resource. The resource information may be all or part of the information for the CG resource. The terminal device may determine the CG resource according to the second message.

In an implementation, the second message may include all information corresponding to the at least one CG resource, and the terminal device, upon receiving the second message sent by the network device, may determine the CG resource and autonomously use the CG resource for an uplink transmission (that is, initiating the uplink transmission on the CG resource in a case where the network device does not perform the scheduling).

In another implementation, the second message may include all information corresponding to the at least one CG resource, and the network device may send a third message to the terminal device, and the third message may be used to activate a specified CG resource of the at least one CG resource. The specified CG resource may be one or more, e.g., the specified CG resource may be a subset or the full set of the at least one CG resource described above. The third message may also be an RRC message, MAC CE, DCI or any of other messages sent by the network device to the terminal device, and the third message may be different from the second message.

In another implementation, the second message may include part of the information corresponding to the at least one CG resource, and the network device may send a third message to the terminal device, and the third message may be used to activate a specified CG resource of the at least one CG resource. The specified CG resource may be one or more. The third message may further include information other than the part of all information corresponding to the specified CG resource. The third message may also be an RRC message, MAC CE, DCI or any of other messages sent by the network device to the terminal device, and the third message may be different from the second message.

In S1003, the network device receives a first message sent by a terminal device.

In some embodiments, the network device may determine the resource use status of at least one CG resource according to the first message.

In other embodiments, the network device may determine that the CG resource is released by the terminal device according to the first message.

In still other embodiments, the network device may determine that the terminal device does not use the CG resource within a specified time range according to the first message.

In yet other embodiments, the network device may determine that the terminal device uses the CG resource outside a specified time range according to the first message.

In yet other embodiments, the network device may determine that the terminal device uses the CG resource within a specified time range according to the first message.

In yet other embodiments, the network device may determine that the terminal device does not use the CG resource outside a specified time range according to the first message.

It should be noted that the specified time range described above may be a time range agreed upon by the protocol, a time range notified by the terminal device to the network device, or a time range notified by the network device to the terminal device, which is limited by the present disclosure. The specified time range may be any time range, by way of example, the specified time range may be N consecutive symbols after sending the first message, and N may be any positive integer, e.g., N may be 4, 7, or 14; the specified time range may also be M consecutive slots after sending the first message, and M may be any positive integer, e.g., M may be 1, 2, 4, 8, 16, or 32.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the network device may allocate the CG resource to other terminal devices for use in a case where the resource use status of the CG resource is an idle status, increasing the utilization rate of the CG resource.

In some embodiments of the present disclosure, in a case where the terminal device performs data transmission for XR (e.g., AR or VR) services, the network device may allocate at least one CG resource to the terminal device, the terminal device performs uplink data transmission based on the CG resource, and if the terminal device does not have uplink data to be transmitted for a certain period of time, the terminal device may notify the network device through the first message that the CG resource is in an idle status, so that the network device may allocate the CG resource to other terminal devices for use.

FIG. 11 is a flow chart of a method for determining a configured grant (CG) resource illustrated according to an illustrative embodiment. As illustrated in FIG. 1, the method may include following steps.

In S1101, the terminal device sends a first message to a network device.

In S1102, the network device receives the first message.

In some embodiments, the first message may be used to indicate the resource use status of the at least one CG resource, and the network device may determine the resource use status of the at least one CG resource according to the first message.

In other embodiments, the network device may determine that the CG resource is released by the terminal device according to the first message.

In other embodiments, the network device may allocate the CG resource to other terminal devices for use according to the first message.

In still other embodiments, the network device may determine that the terminal device does not use the CG resource within a specified time range according to the first message. The network device may also allocate the CG resource to other terminal devices for use within the specified time range.

In yet other embodiments, the network device may determine that the terminal device uses the CG resource outside a specified time range according to the first message. The network device may also not allocate the CG resource to other terminal devices for use outside the specified time range.

In yet other embodiments, the network device may determine that the terminal device uses the CG resource within a specified time range according to the first message. The network device may also not allocate the CG resource to other terminal devices for use within the specified time range.

In yet other embodiments, the network device may determine that the terminal device does not use the CG resource outside a specified time range according to the first message. The network device may also allocate the CG resource to other terminal devices for use outside the specified time range.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the network device may determine the resource use status of the CG resource, or allocate the CG resource to other terminal devices for use according to the first message.

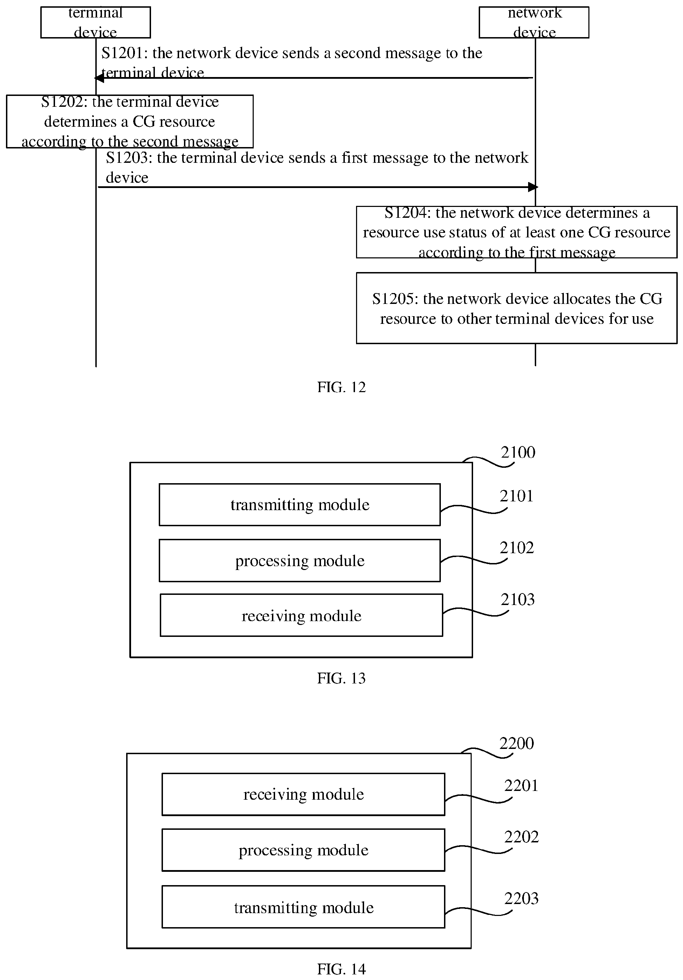

FIG. 12 is a flow chart of a method for determining a configured grant (CG) resource illustrated according to an illustrative embodiment. As illustrated in FIG. 12, the method may include following steps.

In S1201, the network device sends a second message to a terminal device.

The second message may include resource information for instructing the terminal device to determine the CG resource. The resource information may be all or part of the information for the CG resource.

In S1202, the terminal device determines the CG resource according to the second message.

In S1203, the terminal device sends a first message to a network device.

The first message may be used to indicate a resource use status of at least one CG resource.

In some embodiments, the terminal device may release the CG resource with the resource use status being an idle status.

In other embodiments, the terminal device may not use the CG resource with the resource use status being an idle status within the specified time range.

In S1204, the network device determines a resource use status of at least one CG resource according to the first message.

In S1205, the network device allocates the CG resource to other terminal devices for use.

In some embodiments, the network device may allocate the CG resource to other terminal devices for use within the specified time range.

It should be noted that, without contradiction, the present embodiment may be combined with the preceding embodiments or implementations of the present disclosure and its various optional solutions, and the specific implementation of the above steps in the present embodiment may also refer to the description in the preceding embodiments of the present disclosure, which will not be repeated herein.

In this way, the network device may allocate the CG resource to other terminal devices for use, increasing the utilization rate of the CG resource.

In an illustrative embodiment, the present disclosure further provides a communication system, and the communication system may include a terminal device and a network device. The terminal device may perform a method for determining a configured grant (CG) resource involving the terminal device in the preceding embodiment of the present disclosure. Additionally, the network device may perform the method for determining a configured grant (CG) resource involving the network device in the preceding embodiment.

FIG. 13 is a block diagram of an apparatus 2100 for determining a configured grant (CG) resource illustrated according to an illustrative embodiment. As illustrated in FIG. 13, the apparatus 2100 may include:
a transmitting module 2101 configured to send a first message to a network device, in which the first message is used to indicate a resource use status of at least one configured grant (CG) resource.

In some embodiments, the apparatus 2100 may further include:
a processing module 2102 configured to release the CG resource with the resource use status being an idle status in a case where the first message indicates that the resource use status of the CG resource is an idle status.

In some embodiments, the processing module 2102 is configured not to use the CG resource with the resource use status being the idle status within a specified time range, or to be able to use the CG resource outside the specified time range.

In some embodiments, the specified time range is a time range determined according to a time of sending the first message and a protocol-agreed parameter.

In some embodiments, the first message includes a time parameter, and the specified time range is a time range determined according to the time parameter, or the specified time range is a time range determined according to a time of sending the first message and the time parameter.

In some embodiments, the first message includes at least one time parameter, and each time parameter corresponds to one CG resource; or the first message includes one time parameter, and the time parameter corresponds to a plurality of CG resources.

In some embodiments, the resource use status is an idle status and/or a non-idle status.

In some embodiments, the first message includes at least one resource use status parameter, and the resource use status parameter is used to indicate a use status corresponding to part or all of the CG resources.

In some embodiments, the CG resource is a resource shared by the terminal device with other terminal devices.

In some embodiments, the apparatus 2100 may further include:
a receiving module 2103 configured to receive a second message sent by the network device, in which the second message includes resource information for instructing the terminal device to determine the CG resource; and
a processing module 2102 further configured to determine the CG resource according to the resource information.

In some embodiments, the resource information includes at least one of:
physical uplink shared channel (PUSCH) time domain resource configuration information;
PUSCH frequency domain resource configuration information;
CG PUSCH transmission timing;
CG resource index; or
CG resource information.

FIG. 14 is a block diagram of an apparatus 2200 for determining a configured grant (CG) resource illustrated according to an illustrative embodiment. As illustrated in FIG. 14, the apparatus 2200 may include:
a receiving module 2201 configured to receive a first message sent by a terminal device; and
a processing module 2202 configured to determine a resource use status of at least one configured grant (CG) resource according to the first message, in which the CG resource is a CG resource allocated by the apparatus to the terminal device for use.

In some embodiments, the processing module 2202 is further configured to allocate the CG resource to other terminal devices for use according to the first message.

In some embodiments, the processing module 2202 is further configured to allocate the CG resource to other terminal devices for use within a specified time range, or not to allocate the CG resource to other terminal devices for use outside a specified time range.

In some embodiments, the specified time range is a time range determined according to a time of receiving the first message and a protocol-agreed parameter.

In some embodiments, the first message includes a time parameter, and the specified time range is a time range determined according to the time parameter, or the specified time range is a time range determined according to a time of receiving the first message and the time parameter.

In some embodiments, the first message includes at least one time parameter, and each time parameter corresponds to one CG resource; or the first message includes one time parameter, and the time parameter corresponds to a plurality of CG resources.

In some embodiments, the resource use status is an idle status and/or a non-idle status.

In some embodiments, the first message includes at least one resource use status parameter, and the resource use status parameter is used to indicate a use status corresponding to part or all of the CG resources.

In some embodiments, the processing module 2202 is further configured to determine that the resource use status of the CG resource is an idle status in a case where no wireless signal is received from the terminal device through the CG resource.

In some embodiments, the apparatus further includes a transmitting module 2203.

The processing module 2202 is further configured to determine resource information of at least one CG resource configured for the terminal device.

The transmitting module 2203 is configured to send a second message to the terminal device, in which the second message includes resource information for instructing the terminal device to determine the CG resource.

In some embodiments, the resource information includes at least one of:
physical uplink shared channel (PUSCH) time domain resource configuration information;
PUSCH frequency domain resource configuration information;
CG PUSCH transmission timing;
CG resource index; or
CG resource information.

With regard to the device in above embodiment, the specific manner in which each module performs an operation is described in detail in the embodiments relating to the method, and will not be described in detail herein.

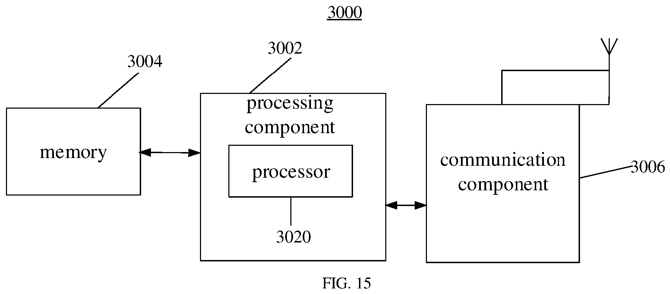

FIG. 15 is a block diagram of a communication device illustrated according to an illustrative embodiment. The communication device 3000 may be a terminal device in the communication system shown in FIG. 1 or a network device in the communication system.

As illustrated in FIG. 15, the communication device 3000 may include one or more of the following components: a processing component 3002, a memory 3004, and a communication component 3006.

The processing component 3002 may be used to control overall operation of the communication device 3000, such as operations related to display, call, data communication, camera and record. The processing component 3002 may include one or more processors 3020 to execute instructions, to achieve all or part of steps of the method for determining a configured grant (CG) resource. Additionally, the processing component 3002 may include one or a plurality of modules, facilitating interaction between the processing component 3002 and other components. For example, the processing component 3002 may include a multimedia module, thereby facilitating interaction between the multimedia component and the processing component 3002.

The memory 3004 is configured to store various types of data to support the operations of the communication device 3000. Examples of these data include instructions, contact data, telephone book data, messages, pictures, videos, etc. for any application or method operated on the communication device 3000. The memory 3004 may be realized by any type of volatile, or non-volatile storage devices or combination thereof, such as a static random access memory (SRAM), an electrically erasable programmable read only memory (EEPROM), an erasable programmable read only memory (EPROM), a programmable read only memory (PROM), a read only memory (ROM), a magnetic memory, a flash memory, a magnetic or optical disk.

The communication component 3006 is configured to facilitate wired or wireless communication between the communication device 3000 and other devices. The communication device 3000 may access to wireless network based on communication standard, such as WiFi, 2G, 3G, 4G, 5G, 6G, NB-IOT, eMTC or combination thereof. In an illustrative embodiment, the communication component 3006 receives a broadcast signal or information related to the broadcast from an external broadcast management system. In an illustrative embodiment, the communication component 3006 further includes a near-field communication (NFC) module to promote short range communication. For example, the NFC module may be realized based on a radio frequency identification (RFID) technology, an infra-red data association (IrDA) technology, an ultra wide band (UWB) technology, a Bluetooth (BT) technology and other technologies.

In an illustrative embodiment, the communication device 3000 may be realized by one or a plurality of application specific integrated circuits (ASIC), digital signal processors (DSP), digital signal processing equipments (DSPD), programmable logic devices (PLD), field-programmable gate arrays (FPGA), controllers, microcontrollers, microprocessors or other electronic elements configured to execute the method for determining the configured grant (CG) resource.

The communication device 3000 may be a stand-alone electronic device or a part of a stand-alone electronic device, for example, in an embodiment, the electronic device may be an integrated circuit (IC) or a chip, where the IC may be a single IC or a collection of ICs; the chip may include, but is not limited to, the following categories: GPU (Graphics Processing Unit), CPU (Central Processing Unit), FPGA (Field Programmable Gate Array), DSP (Digital Signal Processor), ASIC (Application Specific Integrated Circuit), SOC (System on Chip), and so on. The integrated circuit or chip may be used to perform executable instructions (or codes) to implement the method for determining the configured grant (CG) resource. The executable instructions may be stored in the integrated circuit or chip, or may be obtained from other devices or equipment, for example, an integrated circuit or chip includes a processor, a memory, and an interface configured to communicate with the other devices. The executable instructions may be stored in the processor, and the method for determining the configured grant (CG) resource described above is implemented when the executable instructions are executed by the processor; alternatively, the integrated circuit or chip may receive the executable instructions through the interface and transmit them to the processor for execution, to implement the method for determining the configured grant (CG) resource described above.

In illustrative embodiments, the present disclosure also provides a computer-readable storage medium having stored thereon computer program instructions that, when executed by a processor, implement the steps of the method for determining a configured grant (CG) resource provided by the present disclosure. By way of example, the computer-readable storage medium may be a non-transitory computer-readable storage medium including instructions, such as the above-described memory 3004 including instructions, and the instructions are executable by the processor 3020 of the communication device 3000 to complete the above-described method for determining the configured grant (CG) resource. For example, the non-transitory computer readable storage medium may be ROM, random access memory (RAM), CD-ROM, magnetic tape, floppy disks, and optical data storage devices, among others.

In another example embodiment, the present disclosure also provides a computer program product including a computer program capable of being executed by a programmable device, the computer program has a code portion for performing the above-described method for determining the configured grant (CG) resource when executed by the programmable device.

Other embodiments of the present disclosure will readily occur to a person skilled in the art upon consideration of the specification and practice of the present disclosure. The present application is intended to cover any variations, uses, or adaptations of the present disclosure that follow the general principles of the present disclosure and include common knowledge or conventional technical means in the art not disclosed by the present disclosure . The specification and embodiments are to be regarded as illustrative only, with the true scope and spirit of the disclosure being indicated by the following claims.

It should be understood that the present disclosure is not limited to the precise structures described above and illustrated in the accompanying drawings, and that various modifications and changes may be made without departing from the scope thereof. The scope of the present disclosure is limited only by the scope of the appended claims.

## Claims

1. A method for determining a configured grant (CG) resource, performed by a terminal device, comprising:
sending a first message to a network device, wherein the first message is used to indicate a resource use status of at least one configured grant (CG) resource.

2. The method according to claim 1, further comprising:
releasing a CG resource with the resource use status being an idle status, wherein the first message is used to indicate that the resource use status of the CG resource is the idle status.

3. The method according to claim 1, further comprising:
not using the CG resource within a specified time range; or
being capable of using the CG resource outside a specified time range.

4. The method according to claim 3, wherein the specified time range is a time range determined according to a time of sending the first message and a protocol-agreed parameter.

5. The method according to claim 3, wherein the first message comprises a time parameter, and the specified time range is a time range determined according to the time parameter, or the specified time range is a time range determined according to a time of sending the first message and the time parameter.

6. The method according to claim 5, wherein:
the first message comprises at least one time parameter, and each time parameter corresponds to one CG resource; or
the first message comprises one time parameter, and the time parameter corresponds to a plurality of CG resources.

7. The method according to claim 1, wherein the resource use status is an idle status and/or a non-idle status.

8. The method according to claim 7, wherein:
the first message comprises at least one resource use status parameter, and the resource use status parameter is used to indicate a use status corresponding to part or all of the CG resources.

9. The method according to claim 1, wherein the CG resource is a resource shared by the terminal device with other terminal devices.

10. The method according to any one of claims 1 to 9, further comprising:
receiving a second message sent by the network device, wherein the second message comprises resource information for instructing the terminal device to determine the CG resource; and
determining the CG resource according to the resource information.

11. The method according to claim 10, wherein the resource information comprises at least one of:
physical uplink shared channel (PUSCH) time domain resource configuration information;
PUSCH frequency domain resource configuration information;
CG PUSCH transmission timing;
CG resource index; or
CG resource information.

12. A method for determining a configured grant (CG) resource, performed by a network device, comprising:
receiving a first message sent by a terminal device; and
determining a resource use status of at least one configured grant (CG) resource according to the first message, wherein the CG resource is a CG resource allocated by the network device to the terminal device.

13. The method according to claim 12, further comprising:
allocating the CG resource to other terminal devices for use according to the first message, wherein the first message is used to indicate that the resource use status of the CG resource is an idle status.

14. The method according to claim 12, further comprising:
allocating the CG resource to other terminal devices for use within a specified time range, or not allocating the CG resource to other terminal devices for use outside a specified time range.

15. The method according to claim 14, wherein the specified time range is a time range determined according to a time of receiving the first message and a protocol-agreed parameter.

16. The method according to claim 14, wherein the first message comprises a time parameter, and the specified time range is a time range determined according to the time parameter, or the specified time range is a time range determined according to a time of receiving the first message and the time parameter.

17. The method according to claim 16, wherein:
the first message comprises at least one time parameter, and each time parameter corresponds to one CG resource; or
the first message comprises one time parameter, and the time parameter corresponds to a plurality of CG resources.

18. The method according to claim 12, wherein the resource use status is an idle status and/or a non-idle status.

19. The method according to claim 12, wherein:
the first message comprises at least one resource use status parameter, and the resource use status parameter is used to indicate a use status corresponding to part or all of the CG resources.

20. The method according to any one of claims 12 to 19, further comprising:
determining that the resource use status of the CG resource is an idle status in a case where no wireless signal is received from the terminal device through the CG resource.

21. The method according to any one of claims 12 to 19, further comprising:
determining resource information of at least one CG resource configured for the terminal device; and
sending a second message to the terminal device, wherein the second message comprises resource information for instructing the terminal device to determine the CG resource.

22. The method according to claim 21, wherein the resource information comprises at least one of:
physical uplink shared channel (PUSCH) time domain resource configuration information;
PUSCH frequency domain resource configuration information;
CG PUSCH transmission timing;
CG resource index; or
CG resource information.

23. An apparatus for determining a configured grant (CG) resource, comprising:
a transmitting module configured to send a first message to a network device, wherein the first message is used to indicate a resource use status of at least one configured grant (CG) resource.

24. An apparatus for determining a configured grant (CG) resource, comprising:
a receiving module configured to receive a first message sent by a terminal device; and
a processing module configured to determine a resource use status of at least one configured grant (CG) resource according to the first message, wherein the CG resource is a CG resource allocated by the apparatus to the terminal device for use.

25. A communication device, comprising:
a processor; and
a memory configured to store instructions executable by the processor,
wherein the processor is configured to perform steps of the method according to any of claims 1 to 11, or the processor is configured to perform steps of the method according to any of claims 12 to 22.

26. A communication system, comprising:
a terminal device configured to perform the method according to any one of claims 1 to 11; and
a network device configured to perform the method according to any one of claims 12 to 22.

27. A computer storage medium storing computer program instructions that, when executed by a processor, cause steps of the method according to any one of claims 1 to 11 to be implemented; or cause steps of the method according to any one of claims 12 to 22 to be implemented.
